# EUROPÄISCHE PATENTSCHRIFT

(11) **EP 3 164 448 B1**
(45) Veröffentlichungstag und Bekanntmachung des Hinweises auf die Patenterteilung: **18.08.2021**
(21) Anmeldenummer: 15728565.1
(22) Anmeldetag: 16.06.2015
(51) Int. Cl.: C08G 81/02, C08G 63/08, C09D 167/04, C09D 167/06, C08F 36/06, C08F 8/16

(54) **REAKTIONSPRODUKT UND PIGMENTIERTER BASISLACK ENTHALTEND DAS REAKTIONSPRODUKT**
REACTION PRODUCT AND PIGMENTED BASE COAT CONTAINING THE REACTION PRODUCT
PRODUCTION DE RÉACTION ET APPRÊT PIGMENTÉ CONTENANT LE PRODUIT DE RÉACTION

(30) Priorität: 01.07.2014 EP 14175125
(43) Veröffentlichungstag der Anmeldung: 10.05.2017
(73) Patentinhaber: BASF Coatings GmbH, 48165 Münster (DE)
(72) Erfinder: STEINMETZ, Bernhard, 97535 Rütschenhausen (DE); HOFFMANN, Peter, 48308 Senden (DE); REUTER, Hardy, 48167 Münster (DE)
(74) Vertreter: BASF IP Association
(86) Internationale Anmeldenummer: PCT/EP2015/063425
(87) Internationale Veröffentlichungsnummer: WO 2016/000950

(56) Entgegenhaltungen:
- EP-A1- 2 118 168
- EP-A2- 0 266 973
- US-B1- 6 632 915
- None

## Beschreibung

Die vorliegende Erfindung betrifft neuartige pigmentierte wässrige Basislacke enthaltend ein spezielles Reaktionsprodukt. Sie betrifft ferner die Verwendung des besagten Reaktionsprodukts in wässrigen Basislacken. Sie betrifft auch ein Verfahren zur Herstellung von Mehrschichtlackierungen unter Einsatz der neuen Basislacke sowie die mit Hilfe des besagten Verfahrens herstellbaren Mehrschichtlackierungen.

### Stand der Technik

Bekannt ist eine Vielzahl von Verfahren zur Herstellung von farb- und/oder effektgebenden mehrschichtigen Lackierungen (auch genannt Mehrschichtbeschichtungen oder Mehrschichtlackierungen). Aus dem Stand der Technik (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist beispielsweise das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Die heutigen Anforderungen an die anwendungstechnologischen und ästhetischen Eigenschaften solcher Lackierungen (Beschichtungen) sind enorm.

Ein immer wieder auftretendes und vom Stand der Technik nach wie vor nicht völlig zufriedenstellend gelöstes Problem ist das Auftreten so genannter Nadelstiche, das heißt also die nicht ausreichende Stabilität gegen Nadelstiche. Bei dem aufeinanderfolgenden Aufbringen mehrerer Lacke, beispielsweise Basislack und Klarlack, und dem Verzicht der jeweils separaten Härtung der einzelnen Polymerfilme, können ungewünschte Luft-, Lösemittel- und/oder Feuchtigkeitseinschlüsse entstehen, die sich in Form von Blasen unterhalb der Oberfläche der Gesamtlackierung bemerkbar machen können und bei der abschließenden Härtung aufbrechen können. Die dadurch entstehenden Löcher in der Lackierung, auch Nadelstiche genannt, führen zu einem nachteilhaften optischen Erscheinungsbild. Die durch den Gesamtaufbau von Basislackschicht und Klarlackschicht anfallende Menge an organischen Lösemitteln beziehungsweise Wasser sowie die durch die Applikation eingetragene Luftmenge sind zu groß, als dass sie vollständig innerhalb eines abschließenden Härtungsschritts ohne die Erzeugung von Fehlstellen aus der Mehrschichtlackierung entweichen können. Die Eigenschaften des in diesem Zusammenhang besonders wichtigen Basislacks und der daraus hergestellten Lackschichten werden insbesondere von den im Basislack enthaltenen Bindemitteln und Additiven, beispielsweise speziellen Reaktionsprodukten, bestimmt.

Hinzu kommt, dass heutzutage der Ersatz von Beschichtungsmitteln auf Basis organischer Lösemittel durch wässrige Beschichtungsmittel immer wichtiger wird, um den steigenden Anforderungen an die Umweltverträglichkeit Rechnung zu tragen.

US 6632915B1 offenbart ein Polyurethan (B) mit seitenständigen und/oder endständigen Ethenylarylengruppen, herstellbar indem man ein Polyurethanpräpolymer, das freie Isocyanatgruppen enthält, mit einem Addukt umsetzt, das erhältlich ist, indem man ein Ethenylarylenmonoisocyanat mit einem Polyol, Polyamin und/oder einer Hydroxylgruppen und Aminogruppen enthaltenden Verbindung im Molverhältnis 1: 1 umsetzt; sowie ein Pfropfmischpolymerisat, enthaltend einen hydrophoben Kern aus mindestens einem Monomeren und eine hydrophile Schale, die ein Polyurethan enthält oder hieraus besteht, oder einen hydrophoben Kern, der ein Polyurethan enthält oder hieraus besteht, und eine hydrophile Schale aus mindestens einem Monomeren, herstellbar unter Verwendung des Polyurethans (B); sowie ein Pfropfmischpolymerisat, enthaltend einen hydrophoben Kern aus mindestens einem Monomeren und eine hydrophile Schale, die ein Polyurethan enthält oder hieraus besteht, herstellbar indem man mindestens ein hydrophiles olefinisch ungesättigtes Polyurethan mit seitenständigen oder seitenständigen und endständigen Ethenylarylengruppe in einem wäßrigen Medium dispergiert, wonach man mindestens ein hydrophobes Monomer in der Gegenwart des Polyurethans in Emulsion radikalisch (co)polymerisiert. Die vorgenannten Polymere werden insbesondere in Wasserbasislacken eingesetzt, die zu unter anderem verbesserten optischen Eigenschaften von Mehrschichtlackierungen führen.

### Aufgabe

Der vorliegenden Erfindung lag also die Aufgabe zugrunde, einen pigmentierten wässrigen Basislack zur Verfügung zu stellen, mit dessen Hilfe sich Beschichtungen herstellen lassen, die die oben bezeichneten Nachteile des Standes der Technik nicht länger aufweisen. Insbesondere sollte durch den Einsatz eines Reaktionsprodukts in wässrigen Basislacken die Möglichkeit geschaffen werden, Beschichtungen bereitzustellen, die eine hervorragende Stabilität gegen Nadelstiche aufweisen und gleichzeitig durch den Einsatz von eben wässrigen Basislacken auf umweltschonende Weise hergestellt werden können.

### Lösung

Die genannten Aufgaben konnten durch einen pigmentierten wässrigen Basislack gelöst werden, welcher ein Reaktionsprodukt enthält, welches herstellbar ist durch Umsetzung von
(a) mindestens einem aliphatischen linearen Polyester mit zwei terminalen funktionellen Gruppen (a.1)
   mit
(b) mindestens einem Dienpolymerisat mit zwei terminalen funktionellen Gruppen (b.1),
wobei mindestens eine Art von Gruppen (a.1) mit mindestens einer Art von Gruppen (b.1) verknüpfend umgesetzt wird, die Komponenten (a) und (b) bei der Umsetzung in einem molaren Verhältnis von 2,3/0,7 bis 1,7/1,6 eingesetzt werden und das resultierende Reaktionsprodukt ein zahlenmittleres Molekulargewicht von 1000 bis 15000 g/mol aufweist.

Der neue Basislack wird in der Folge auch als erfindungsgemäßer Basislack bezeichnet. Bevorzugte Ausführungsformen gehen aus der folgenden Beschreibung sowie den Unteransprüchen hervor.

Ebenfalls Gegenstand der vorliegenden Erfindung ist die Verwendung des Reaktionsprodukts in wässrigen Basislacken zur Verbesserung der Stabilität gegen Nadelstiche. Nicht zuletzt betrifft die vorliegende Erfindung ein Verfahren zur Herstellung einer mehrschichtigen Lackierung auf einem Substrat sowie eine nach dem genannten Verfahren hergestellte Mehrschichtlackierung.

Durch den Einsatz der Reaktionsprodukte werden Basislacke erhalten, deren Verwendung bei der Herstellung von Beschichtungen, insbesondere Mehrschichtlackierungen, zu einer hervorragenden Stabilität gegen Nadelstiche führt. Gleichzeitig wird ein hochwertiges ökologisches Profil gewahrt. Das Reaktionsprodukt sowie der erfindungsgemäße Basislack können im Bereich der Erstlackierung, insbesondere dem Bereich der Automobilindustrie, sowie im Bereich der Automobilreparaturlackierung eingesetzt werden.

### Komponente (a)

Das Reaktionsprodukt ist unter Einsatz mindestens eines aliphatischen linearen Polyesters (a) mit zwei terminalen funktionellen Gruppen (a.1) erhältlich.

Die Arten der terminalen funktionellen Gruppen (a.1) sind so ausgewählt beziehungsweise auf die weiter unten beschriebenen Arten der terminalen funktionellen Gruppen (b.1) des Dienpolymerisats (b) abgestimmt, dass mindestens eine dieser Arten von Gruppen (a.1) mit mindestens einer der Arten von Gruppen (b.1) verknüpfend umgesetzt werden kann. Die Gruppen (a.1) eines Polyesters (a) können gleich oder verschieden sein. Selbiges gilt für die Gruppen (b.1) eines Dienpolymerisats. Bevorzugt sind die Gruppen (b.1) eines Dienpolymerisats gleich. Bei der Umsetzung erfolgt also eine Verknüpfung der beiden Komponenten (a) und (b). Dies kann unter an sich bekannten Bedingungen und Mechanismen wie Kondensations- und/oder Additionsreaktionen erfolgen. Solche Arten von terminalen funktionellen Gruppen sind problemlos auszuwählen. Selbiges gilt für die Kombination dieser Gruppen, um eine Verknüpfung der Komponenten (a) und (b) realisieren zu können, beispielsweise durch entsprechende Auswahl einer nukleophilen funktionellen Gruppe (b.1), die an einem elektrophilen Zentrum einer funktionellen Gruppe (a.1) angreifen kann. Als funktionelle Gruppen beispielhaft genannt seien Hydroxyl-, Carboxyl-, Amino-, Thiol- oder Hydrazidgruppen. Bevorzugte Gruppen (a.1) sind Hydroxyl- und Carboxylgruppen, da solche Gruppen bei der Herstellung von Polyestern ohnehin in Form der Edukte vorhanden sind. Ganz besonders bevorzugt ist, dass der Polyester (a) im Mittel eine Carboxylgruppe (a.1) und eine Hydroxylgruppe (a.1) aufweist.
Auch Polyester sind bekannt. Es handelt sich um polymere Harze, die durch Umsetzung mehrwertiger organischer Polyole und mehrwertiger organischer Carbonsäuren (Monomere) hergestellt werden können. Die Polyole und Polycarbonsäuren werden dabei durch Veresterung, das heißt also durch Kondensationsreaktionen, miteinander verknüpft. Je nach Art, Funktionalität und eingesetzten Anteilen und Verhältnissen der Ausgangskomponenten werden dabei beispielsweise lineare oder verzweigte Produkte erhalten. Während lineare Polymerabschnitte beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten und weiter unten noch genauer beschriebenen Lactonen.

Der Begriff Polymer beziehungsweise polymeres Harz versteht sich im Rahmen der vorliegenden Erfindung wie folgt. Bei einem Polymer handelt es sich um Mischungen von verschieden großen Molekülen. Zumindest ein Teil dieser Moleküle zeichnet sich durch eine Abfolge von gleichen oder verschiedenen Monomereinheiten (als reagierte Form von Monomeren) aus. Ein Polymer beziehungsweise das entsprechende Molekülgemisch enthält also grundsätzlich Moleküle, die mehrere (das heißt mindestens zwei) gleiche oder verschiedene Monomereinheiten enthalten. Selbstverständlich können in dem Gemisch auch anteilig die Monomere selbst enthalten sein, das heißt also in ihrer nicht reagierten Form. Dies bedingt bekanntermaßen allein die in der Regel molekular nicht einheitlich ablaufende Herstellungsreaktion, das heißt insbesondere die Verknüpfung von Monomeren. Während einem bestimmten Monomer ein diskretes Molekulargewicht zuzuordnen ist, ist ein Polymer also eine Mischung von Molekülen, die sich in ihrem Molekulargewicht unterscheiden. Ein Polymer kann daher beispielsweise nicht durch ein diskretes Molekulargewicht beschrieben werden, sondern ihm werden immer mittlere Molekulargewichte, beispielsweise ein zahlenmittleres Molekulargewicht, zugeordnet.

Als Polymer wird also im Rahmen der vorliegenden Erfindung eine Mischung von Molekülen verstanden, wobei die Mischung Moleküle umfasst, die sich durch eine Abfolge von gleichen oder verschiedenen Monomereinheiten auszeichnen. Im Mittel umfassen die das Polymer ausmachenden Moleküle also jedenfalls mehr als ein Monomer beziehungsweise mehr als eine Monomereinheit. Bevorzugt sind im Mittel mindestens 3, insbesondere mindestens 5, ganz besonders bevorzugt mindestens 7 Monomereinheiten pro Molekül vorhanden. Die Anzahl an im Mittel vorhandenen Monomereinheiten kann beispielsweise durch Bestimmung des zahlenmittleren Molekulargewichts und unter Berücksichtigung der Molekulargewichte und Verhältnisse der eingesetzten Monomere ermittelt werden.

Der mindestens eine Polyester (a) ist linear. Der Ausdruck linearer Polyester bedeutet im Rahmen der vorliegenden Erfindung, dass das Polymerrückgrad, das heißt also die Abfolge von Esterbindungen, welche die Verknüpfung der einzelnen Polyesterbausteine ausmachen, linearen Charakter hat. Die einzelnen zur Herstellung eingesetzten Verbindungen (Monomere) besitzen also jeweils zwei zur Esterbindung befähigte funktionelle Gruppen, das heißt also insbesondere Hydroxylgruppen, Carboxylgruppen, und/oder Anhydridgruppen. Durch die Verknüpfung entsteht dann eine Polyesterkette beziehungsweise ein linearer Polyester.

Der mindestens eine Polyester (a) ist aliphatisch. Es handelt sich also um ein organisches Polymer, das keine aromatischen Gruppen enthält. Dies ist durch den Einsatz entsprechender Monomere problemlos zu realisieren.

Die reaktiven funktionellen Gruppen (a.1) des Polyesters (a) sind terminal. Dies bedeutet also, dass die funktionellen Gruppen jeweils am Ende der den linearen Charakter ausmachenden Polyesterkette angeordnet sind.

Das zahlenmittlere Molekulargewicht des Polyesters (a) kann beispielsweise von 200 bis 5000 g/mol, insbesondere bevorzugt 500 bis 3000 g/mol liegen. Das zahlenmittlere Molekulargewicht wird im Rahmen der vorliegenden Erfindung, sofern nicht spezifisch anders angegeben, mittels Dampfdruckosmose bestimmt. Gemessen wurde im Rahmen der vorliegenden Erfindung mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

Das Reaktionsprodukt ist herstellbar unter Einsatz der beschriebenen Polyester (a). Dies bedeutet aber nicht zwingend, dass die entsprechende Komponente auch zwingend eingesetzt werden muss.

Nicht nur möglich, sondern im Rahmen der vorliegenden Erfindung bevorzugt, ist, dass das Reaktionsprodukt durch ringöffnende Umsetzung eines aliphatischen Lactons mit einem wie weiter unten beschriebenen zwei terminale Hydroxylgruppen aufweisenden Dienpolymerisat hergestellt wird.

Bekanntermaßen werden durch ringöffnende Polymerisation von Lactonen Polyester erhalten. Dabei werden in der Regel als Starter beziehungsweise Katalysator organische Alkohole eingesetzt. Die Hydroxylgruppe der Alkohole greift nucleophil an der intramolekularen Estergruppe eines Lactonmoleküls an. Es entsteht eine Esterverknüpfung zwischen Starteralkohol und dem Lactonmolekül. Letzteres weist durch die Ringöffnung eine weitere reaktive OH-Gruppe (beziehungsweise die entsprechend deprotonierte Gruppe) auf, die an einem erneuten Lactonmolekül auf die beschriebene Weise angreifen kann. Unter ringöffnender Umsetzung eines aliphatischen Lactons mit einem wie weiter unten beschriebenen Dienpolymerisat ist also zu verstehen, dass das Dienpolymerisat als Starter eingesetzt wird und dann das Lacton auf die beschriebene Weise sukzessive zu einem an das Dienpolymerisat angeknüpften aliphatischen Polyester umgesetzt wird. Formal bedeutet dies dann, dass die Moleküle des Polyesters (a) als Gruppen (a.1) eine Carboxylgruppe und eine Hydroxylgruppe (a.1) besitzen. Die Moleküle des Dienpolymerisats besitzen in diesem Fall als Gruppen (b.1) zwei Hydroxylgruppen. Verknüpfend umgesetzt werden dabei dann die Carboxylgruppen (a.1) des Polyesters (a) mit den Hydroxylgruppen (b.1) des Dienpolymerisats (b). Es wird also eine Art von Gruppen (a.1) (nämlich die Carboxylgruppen) mit der einen vorhandenen Art von Gruppen (b.1) (nämlich Hydroxylgruppen) verknüpfend umgesetzt. Das Reaktionsprodukt weist dann freie terminale Hydroxylgruppen auf, bei denen es sich insbesondere um die Hydroxylgruppen (a.1) des Polyesters (a) handelt.

Sofern im Rahmen der vorliegenden Erfindung die Umsetzung von Gruppen oder Arten von Gruppen angesprochen ist, kann es sich sowohl um eine anteilige als auch eine vollständige Umsetzung der vorhandenen Gruppen handeln. Allerdings gilt schon aus experimentell statistischen Gründen, dass auch für den Fall, dass eine vollständige Umsetzung angestrebt ist, eine solche ideale vollständige Umsetzung in der Regel nicht erreicht wird.

Aliphatische Lactone sind bekannt. Es handelt sich um heterocyclische organische Verbindungen, die innerhalb des Molekülrings eine Esterbindung aufweisen. Letztlich handelt es sich also um intramolekulare Ester von Hydroxycarbonsäuren. Einsetzt werden können die an sich bekannten aliphatischen Lactone, beispielsweise gamma-Valerolacton oder epsilon-Caprolacton.

Die aliphatischen Lactone weisen also eine heterocyclische Struktur auf; bevorzugte Lactone können durch die folgende Strukturformel (I) beschrieben werden: 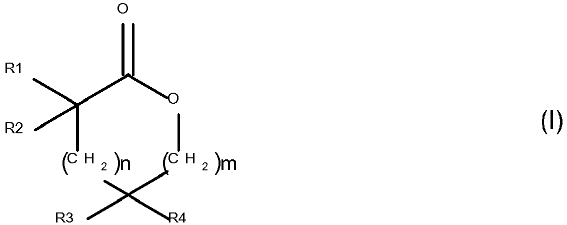 worin
R₁, R₂, R₃ und R₄, unabhängig voneinander, für H, C₁- bis C₆-Alkyl, C₃- bis C₆-Alkylen oder C₁- bis C₆-Alkoxy, bevorzugt H oder C₁- bis C₄-Alkyl, insbesondere H, stehen, und
n und m, unabhängig voneinander für eine ganze Zahl von 0 bis 6, bevorzugt 1 bis 4 stehen, und
n + m bevorzugt 2 bis 6, insbesondere bevorzugt 2 bis 4, besonders bevorzugt 3 ist. Bevorzugte Lactone sind beta-Propiolacton, gamma-Butyrolacton, gamma-Valerolacton, epsilon-Caprolacton oder Methyl-epsilon-caprolacton, vorzugsweise gamma-Butyrolacton und epsilon-Caprolacton, besonders bevorzugt epsilon-Caprolacton. Solche Lactone (a) können im Handel erhalten werden.

### Komponente (b)

Die Herstellung der Reaktionsprodukte kann unter Einsatz mindestens eines Dienpolymerisats mit zwei terminalen funktionellen Gruppen (b.1) erfolgen.

Für die Gruppen (b.1) beziehungsweise die Arten von Gruppen (b.1) gilt das für die Gruppen (a.1) beziehungsweise der Arten von Gruppen (a.1) oben Beschriebene entsprechend. Beispielhaft seien Hydroxyl-, Carboxyl-, Amino-, Thiol- und Hydrazidgruppen genannt. Werden als Gruppen (a.1) Carboxylgruppen ausgewählt, so werden als Gruppen (b.1) beispielsweise Hydroxyl- und/oder Aminogruppen, bevorzugt Hydroxylgruppen, ausgewählt, da diese Gruppen unter üblichen Bedingungen mit Carboxylgruppen reagieren. Ähnliches gilt, wenn die bevorzugte ringöffnende Umsetzung mit einem aliphatischen Lacton durchgeführt wird. Denn die Reaktion mit dem Lacton entspricht formal einer Umsetzung einer Hydroxylgruppe (b.1) mit einer Carboxylgruppe (a.1). Formal bedeutet dies, dass der Polyester (a) im Mittel eine Carboxylgruppe (a.1) und eine Hydroxylgruppe (a.1) enthält, das Dienpolymerisat zwei Hydroxylgruppen (b.1) aufweist. Die funktionelle Gruppe (a.1), die mit einer Hydroxylgruppe (b.1) verknüpfend umgesetzt wird, ist dann die Carboxylgruppe.

Als miteinander reaktive Gruppen (Gruppen, die verknüpfend umgesetzt werden) gelten also insbesondere die folgenden Paare. Hydroxylgruppen mit Carbonsäuregruppen sowie Aminogruppen mit Carbonsäuregruppen. Bevorzugt ist die verknüpfende Umsetzung von Hydroxylgruppen mit Carbonsäuregruppen unter Ausbildung einer Esterbindung.

Dienpolymerisate mit zwei terminalen funktionellen Gruppen wie Hydroxyl- oder Aminogruppen sind bekannt. Bei Dienpolymerisaten allgemein handelt es sich um Polymere, die durch Polymerisation von konjugierten Dienmonomeren mit insbesondere 4 bis 8 Kohlenstoffatomen wie bevorzugt Butadien, Isopren, oder Dimethylbutadien hergestellt werden. Die Polymerisation kann über unterschiedliche, an sich bekannte Mechanismen unter Einsatz bekannter Polymerisationsinitiatoren erfolgen, insbesondere über radikalische oder anionische Polymerisationsmechanismen. Die Einführung terminaler funktioneller Gruppen gelingt problemlos über die Verwendung spezieller Initiatoren, über die die funktionellen Gruppen oder Vorläufer dieser Gruppen eingeführt werden können und/oder durch die gezielte Terminierung von zunächst hergestellten Dienpolymerisaten mit Verbindungen, durch die die funktionellen Gruppen eingeführt werden können. Beispielhaft sie die Terminierung von Polybutadienen mit Alkylenoxiden wie Ethylenoxid oder Propylenoxid genannt, die zu Hydroxylterminierten Polybutadienen führt. Typische zahlenmittlere Molekulargewichte solcher Dienpolymerisate liegen von beispielsweise 200 bis 10000 g/mol. Die Herstellung solcher Dienpolymerisate ist zahlreich beschrieben, beispielhaft sei auf EP 1 439 194 A1, EP 0 058 329 B1, DE 2 900 880 A1, DE 2 908 298 A1 oder auch EP 1 314 744 A2 verwiesen. Solche Dienpolymerisate sind im Handel erhältlich.

Bevorzugt sind im Rahmen der vorliegenden Erfindung Polybutadiene. Polybutadiene sind bekannt, es handelt sich um Polymere des 1,3-Butadiens. Die in der Regel über eine anionische Polymerisation verlaufende Herstellung kann zu 1,4-Verknüpfungen (die resultierenden Grundeinheiten des Polymerrückgrads enthaltend eine olefinisch ungesättigte Bindung, die cis- oder trans-konfiguriert sein kann) und 1,2-Verknüpfungen (die olefinisch ungesättigte Bindung ist in der Seitenkette angeordnet) führen. Je nach eingesetzten Katalysatoren und Reaktionsbedingungen können die Polybutadiene unterschiedliche Anteile an 1,4-cis-, 1,4-trans- und 1,2-Verknüpfungen enthalten (Bestimmung über beispielsweise Infrarot- und/oder NMR-Spektroskopie möglich). Die Arten der einsetzbaren Katalysatoren und der möglichen Reaktionsführungen sind bekannt. Möglich ist auch, dass die Polybutadiene nach der Herstellung hydriert werden, das heißt die Doppelbindungen anteilig oder vollständig hydriert werden. Auch solche hydrierten Polybutadiene sind bekannt.

Die Polybutadiene besitzen beispielsweise ein zahlenmittleres Molekulargewicht von 200 bis 10000 g/mol, bevorzugt 500 bis 5000 g/mol, insbesondere bevorzugt 750 bis 3000 g/mol. Solche Polybutadiene sind beispielsweise unter den Handelsbezeichnungen Krasol oder Poly bd (Fa. Cray Valley) erhältlich und können direkt zur Herstellung der Reaktionsprodukte eingesetzt werden.

### Das Reaktionsprodukt

Die Herstellung des Reaktionsproduktes über die Komponenten (a) und (b) kann nach allgemein bekannten Methoden erfolgen. Dabei werden die beiden Komponenten über ebenso bekannte Kondensations- und/oder Additionsreaktionen miteinander verknüpft. Umgesetzt wird also mindestens eine Art von Gruppen (a.1) der Komponente (a) mit mindestens einer Art von Gruppen (b.1) der Komponente (b). Welche Gruppen miteinander verknüpfend umsetzbar sind ist bekannt und ist auch schon weiter oben erläutert. Bevorzugte Kombinationen sind die folgenden. Hydroxylgruppe mit Carboxylgruppe, Aminogruppe mit Carboxylgruppe, Aminogruppe mit Isocyanatgruppe.

Bevorzugt ist, dass Carboxylgruppen (a.1) der Komponente (a) mit Hydroxylgruppen (b.1) der Komponente (b) verknüpfend umgesetzt werden. Eine solche Umsetzung kann beispielsweise in Masse oder in Lösung mit typischen organischen Lösemitteln bei Temperaturen von beispielsweise 50°C bis 300°C erfolgen. Selbstverständlich können auch typische Katalysatoren wie Schwefelsäure, Sulfonsäuren und/oder Tetraalkyltitanate, Zink- beziehungsweise Zinnalkoxylate, Dialkylzinnoxide wie beispielsweise Di-n-butylzinnoxid oder organische Salze der Dialkylzinnoxide zum Einsatz kommen. Üblicherweise erfolgt zumindest bei Kondensationsreaktionen zudem der Einsatz eines Wasserabscheiders zum Auffangen des anfallenden Wassers.

Die Komponenten (a) und (b) werden bei der möglichen Herstellung in einem molaren Verhältnis von 2,3/0,7 bis 1,7/1,6, bevorzugt 2,2/0,8 bis 1,8/1,6 und ganz besonders bevorzugt von 2,1/0,9 bis 1,8/1,5 eingesetzt. Nochmals bevorzugt ist ein Verhältnis von 2,1/0,9 bis 1,8/1,0. Ganz besonders bevorzugt ist ein Verhältnis von 2,0/1,0. Die Komponente (a) wird also jedenfalls im molaren Überschuss eingesetzt.

In dem bevorzugten Fall, dass das Reaktionsprodukt durch ringöffnende Umsetzung eines aliphatischen Lactons mit einem zwei terminale Hydroxylgruppen enthaltenen Dienpolymerisat, bevorzugt einem Polybutadien, hergestellt wird, gilt folgendes. Da hierbei der Polyester (a) praktisch in-situ hergestellt wird, das heißt also die Herstellung des Polyesters (a) untrennbar mit der bevorzugt beiderseitigen Anknüpfung an das Dienpolymerisat verbunden ist, resultiert im Mittel ein Reaktionsprodukt, bei dem ein zentral angeordnetes Dienpolymerisat bevorzugt über zwei Esterbindungen mit zwei endständigen Polyestereinheiten verknüpft ist. In diesem bevorzugten Fall gilt also formal, dass das Verhältnis der Komponenten (a) und (b) 2,0/1,0 ist. Das Molekulargewicht des aliphatischen linearen Polyesters und damit auch des resultierenden Reaktionsprodukts kann dann auf einfach Weise durch Wahl des stöchiometrischen Verhältnisses von eingesetzten Lacton und Dienpolymerisat eingestellt werden. Werden beispielsweise ein Äquivalent Dienpolymerisat mit zehn Äquivalenten Lacton umgesetzt, entsteht im Mittel ein Reaktionsprodukt der Form A-B-A, wobei A für ein Polyestersegment steht, das im Mittel aus fünf Lactoneinheiten besteht, und B für ein Dienpolymerisatsegment steht. Dies wird sich innerhalb experimenteller Fehlergrenzen in dem dann experimentell bestimmten zahlenmittleren Molekulargewicht des Reaktionsprodukts widerspiegeln. Das molare Verhältnis von aliphatischem Lacton und Dienpolymerisat liegt in dieser Ausführungsform von 2/1 bis 50/1, bevorzugt 5/1 bis 40/1, insbesondere bevorzugt 10/1 bis 30/1. Insbesondere ab einem Verhältnis von mindestens 5/1 kann schon rein statistisch garantiert werden, dass das Produkt an beiden Seiten des Dienpolymerisats ein Polyestersegment aufweist.

Das Reaktionsprodukt besitzt bevorzugt eine nur niedrige Säurezahl von kleiner 10 mg KOH/g. Bevorzugt besitzt es eine Säurezahl von kleiner 7,5 mg KOH/g und ganz besonders bevorzugt von kleiner 5 mg KOH/g. Die Säurezahl wird gemäß DIN 53402 bestimmt. Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Das Reaktionsprodukt besitzt ein zahlenmittleres Molekulargewicht von 1000 bis 15000 g/mol, bevorzugt 1200 bis 10000 g/mol und ganz besonderes bevorzugt 1500 bis 5000 g/mol.

Das Reaktionsprodukt ist in der Regel hydroxyfunktionell, bevorzugt im Mittel dihydroxyfunktionell.

Besonders bevorzugte Ausführungsformen werden im Folgenden genannt:
a) In einer besonders bevorzugten Ausführungsform des Reaktionsprodukts wird es hergestellt durch ringöffnende Umsetzung eines aliphatischen Lactons, bevorzugt epsilon-Caprolacton, mit einem zwei terminale Hydroxylgruppen enthaltenen Dienpolymerisat, bevorzugt einem Polybutadien, wobei das molare Verhältnis von aliphatischem Lacton und Dienpolymerisat von 2/1 bis 50/1, insbesondere 5/1 bis 40/1, liegt.
b) In einer weiteren besonders bevorzugten Ausführungsform des Reaktionsprodukts besitzt das Dienpolymerisat, bevorzugt das Polybutadien, ein zahlenmittleres Molekulargewicht von 500 bis 5000 g/mol.
c) In einer weiteren besonders bevorzugten Ausführungsform des Reaktionsprodukts besitzt dieses eine Säurezahl von kleiner 10 mg KOH/g.
d) In einer weiteren besonders bevorzugten Ausführungsform des Reaktionsprodukts besitzt dieses ein zahlenmittleres Molekulargewicht von 1500 bis 5000 g/mol.

In einer ganz besonders bevorzugten Ausführungsform des Reaktionsprodukts sind alle der unter a) bis d) angegebenen Merkmale in Kombination realisiert.

### Der pigmentierte wässrige Basislack

Die vorliegende Erfindung betrifft einen pigmentierten wässrigen Basislack, welcher mindestens ein Reaktionsprodukt enthält. Alle oben genannten bevorzugten Ausführungsformen hinsichtlich des Reaktionsprodukts gelten selbstverständlich auch in Bezug auf den Basislack enthaltend das Reaktionsprodukt.

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit einem eingebrannten (vollständig gehärteten) Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen.

Mittlerweile ist es durchaus üblich, mehr als eine Basislackschicht aufzutragen. Dementsprechend stellt in einem solchen Fall eine erste Basislackschicht den Untergrund für eine zweite dar. Möglich ist dabei insbesondere, anstatt einer Applikation auf eine Schicht eines eingebrannten Füllers den ersten Basislack direkt auf ein mit einer gehärteten Elektrotauschlackschicht versehenes Metallsubstrat zu applizieren und den zweiten Basislack direkt auf die erste Basislackschicht zu applizieren, ohne das letztere separat gehärtet wird. Um eine Basislackschicht beziehungsweise die oberste Basislackschicht insbesondere gegen Umwelteinflüsse zu schützen, wird auf dieser mindestens noch eine zusätzliche Klarlackschicht appliziert. Dies erfolgt in der Regel im nass-in-nass-Verfahren, das heißt der Klarlack wird appliziert, ohne dass die Basislackschicht gehärtet wird. Die Härtung erfolgt dann abschließend gemeinsam. Verbreitet ist inzwischen auch, nur eine Basislackschicht auf einer gehärteten Elektrotauschlackschicht herzustellen, dann einen Klarlack zu applizieren und diese beiden Schichten dann gemeinsam zu härten.

Die Summe über die gewichtsprozentualen Anteile, bezogen auf das Gesamtgewicht des pigmentierten wässrigen Basislacks, aller Reaktionsprodukte beträgt bevorzugt 0,1 bis 30 Gew.-%, besonders bevorzugt 1 bis 20 Gew.-% und ganz besonders bevorzugt 1,5 bis 15 Gew.-% oder sogar 2 bis 12 Gew.-%.

Liegt der Gehalt des Reaktionsprodukts unter 0,1 Gew.-% so ist es gegebenenfalls möglich, dass keine Verbesserung Stabilität gegen Nadelstiche mehr erzielt wird. Liegt der Gehalt bei mehr als 30 Gew.-% so können unter Umständen Nachteile auftreten, wie zum Beispiel eine Inkompatibilität des besagten Reaktionsprodukts im Basislack. Eine solche Inkompatibilität kann sich beispielsweise durch ungleichmäßigen Verlauf sowie durch Ausschwimmen oder Absetzen zeigen.

Im Falle einer möglichen Spezifizierung auf Basislacke enthaltend bevorzugte Reaktionsprodukte in einem speziellen Anteilsbereich gilt folgendes. Die Reaktionsprodukte, die nicht in die bevorzugte Gruppe fallen, können selbstverständlich weiterhin im Basislack enthalten sein. Der spezielle Anteilsbereich gilt dann nur für die bevorzugte Gruppe von Reaktionsprodukten. Bevorzugt ist allerdings, dass für den Gesamtanteil von Reaktionsprodukten bestehend aus Reaktionsprodukten aus der bevorzugten Gruppe und Reaktionsprodukten, die nicht in die bevorzugte Gruppe fallen, ebenfalls der spezielle Anteilsbereich gilt.

Würde also eine Beschränkung auf einen Anteilsbereich von 1,5 bis 15 Gew.-% und eine bevorzugte Gruppe von Reaktionsprodukten durchgeführt werden, so gilt dieser Anteilsbereich augenscheinlich zunächst nur für die bevorzugte Gruppe an Reaktionsprodukten. Bevorzugt wäre dann aber, dass insgesamt von allen ursprünglich umfassten Reaktionsprodukten bestehend aus Reaktionsprodukten aus der bevorzugten Gruppe und Reaktionsprodukten, die nicht in die bevorzugte Gruppe fallen, ebenfalls von 1,5 bis 15 Gew.-% enthalten sind. Werden also 5 Gew.-% von Reaktionsprodukten der bevorzugten Gruppe eingesetzt, so können höchstens 10 Gew.-% der Reaktionsprodukte der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die Pigmente, die Polyurethanharze als Bindemittel oder auch die Vernetzungsmittel wie Melaminharze.
Die erfindungsgemäßen Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 30 Gew.-%, besonders bevorzugt 3 bis 25 Gew.-%, bezogen auf das Gesamtgewicht des pigmentierten wässrigen Basislacks, liegen.

Im Rahmen der vorliegenden Erfindung sind Basislacke bevorzugt, die als Bindemittel physikalisch, thermisch oder thermisch und mit aktinischer Strahlung härtbare Polymere enthalten. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das Reaktionsprodukt oder weiter unten beschriebene typische Vernetzungsmittel, auch wenn der Ausdruck im Folgenden hauptsächlich in Bezug auf bestimmte physikalisch, thermisch oder thermisch und mit aktinischer Strahlung härtbare Polymere, beispielsweise bestimmte Polyurethanharze, verwendet wird.

Neben dem Reaktionsprodukt enthalten die erfindungsgemäßen pigmentierten wässrigen Basislacke besonders bevorzugt mindestens ein Polyurethanharz als Bindemittel. Derartige Polyurethanharze enthaltende Lacke können ebenfalls üblicherweise physikalisch, thermisch oder thermisch und mit aktinischer Strahlung gehärtet werden.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert. Werden die thermische Härtung und die Härtung mit aktinischem Licht gemeinsam angewandt, spricht man auch von "Dual Cure".

In der vorliegenden Erfindung sind sowohl Basislacke bevorzugt, die physikalisch, als auch solche die thermisch oder thermisch und mit aktinischer Strahlung, also mittels "Dual Cure", härtbar sind.

Als thermisch härtende Basislacke sind solche bevorzugt, die als Bindemittel ein Polyurethanharz, bevorzugt ein hydroxygruppenhaltiges Polyurethanharz, und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Die Summe über die gewichtsprozentualen Anteile, bezogen auf das Gesamtgewicht des pigmentierten wässrigen Basislacks, aller Vernetzungsmittel, bevorzugt Aminoplastharze und/oder blockierte und/oder unblockierte Polyisocyanat, insbesondere bevorzugt Melaminharze, beträgt bevorzugt 1 bis 20 Gew.-%, besonders bevorzugt 1,5 bis 17,5 Gew.-% und ganz besonders bevorzugt 2 bis 15 Gew.-% oder sogar 2,5 bis 10 Gew.-%.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein Polyurethanharz, in dessen Gegenwart olefinisch ungesättigte Monomere polymerisiert wurden. Das Polyurethanharz kann dabei neben dem aus der Polymerisation der olefinisch ungesättigten Monomere hervorgegangenen Polymer vorliegen ohne dass diese kovalent miteinander verbunden sind. Ebenso kann das Polyurethanharz aber auch mit dem aus der Polymerisation der olefinisch ungesättigten Monomere hervorgegangenen Polymer kovalent verbunden sein. Bei den olefinisch ungesättigten Monomeren handelt es sich bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethanharz gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung) und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethanharz besitzt vorzugsweise ein zahlenmittleres Molekulargewicht von 200 bis 30000 g/mol, bevorzugt von 2000 bis 20000 g/mol. Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird im Rahmen der vorliegenden Erfindung nach DIN 53240, die Säurezahl gemäß DIN 53402 bestimmt.

Der Polyurethanharzgehalt liegt bevorzugt zwischen 5 und 80 Gew.-%, besonders bevorzugt zwischen 8 und 70 Gew.-% und besonders bevorzugt zwischen 10 und 60 Gew.-%, jeweils bezogen auf den filmbildenden Festkörper des Basislacks.

Unter filmbildendem Festkörper, welcher letztlich dem Bindemittelanteil entspricht, ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Die Summe über die gewichtsprozentualen Anteile, bezogen auf das Gesamtgewicht des pigmentierten wässrigen Basislacks, aller Polyurethanharze beträgt bevorzugt 2 bis 40 Gew.-%, besonders bevorzugt 2,5 bis 30 Gew.-% und ganz besonders bevorzugt 3 bis 20 Gew.-%.

Der einzusetzende pigmentierte wässrige Basislack kann zudem mindestens einen von den Reaktionsprodukten verschiedenen Polyester, insbesondere einen Polyester mit einem zahlenmittleren Molekulargewicht von 400 bis 5000 g/mol als Bindemittel enthalten. Entsprechende Polyester werden beispielsweise in DE 4009858 in Spalte 6, Zeile 53 bis Spalte 7, Zeile 61 und Spalte 10, Zeile 24 bis Spalte 13, Zeile 3 beschrieben.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis AS S130 (BASF) und Polyurethanverdickern, wie beispielsweise dem Handelsprodukt Rheovis PU 1250 (BASF). Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033] ,
bekannt. Sie werden in den üblichen und bekannten Mengen eingesetzt.

Der Festkörpergehalt der erfindungsgemäßen Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper, sofern nicht explizit anders angegeben, nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten des Basislacks am Gesamtgewicht des Basislacks zu bestimmen. So kann beispielsweise der Festkörper einer Dispersion eines Polyurethanharzes, welches dem Basislack zugegeben werden soll, entsprechend bestimmt werden, um den Anteil dieses Polyurethanharzes an der Gesamtkomposition zu ermitteln.

Der erfindungsgemäße Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der erfindungsgemäß eingesetzten Basislacke kann unter Einsatz der für die Herstellung von Basislacken üblichen und bekannten Mischverfahren und Mischaggregaten erfolgen.

### Das erfindungsgemäße Verfahren und die erfindungsgemäße Mehrschichtlackierung

Ein weiterer Aspekt der vorliegenden Erfindung ist ein Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass in Stufe (1) ein pigmentierter wässriger Basislack eingesetzt wird, welcher mindestens ein Reaktionsprodukt enthält. Alle vorstehend genannten Ausführungen hinsichtlich des Reaktionsprodukts und des pigmentierten wässrigen Basislacks gelten auch für das erfindungsgemäße Verfahren. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß eingesetzten pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wir dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf wie oben beschriebene mit gehärteten Elektrotauchlackierungen und/oder Füllern vorbeschichtete Metallsubstrate kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.
Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als zusätzliches Bindemittel ein Polyurethanharz und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

In einer besonderen Ausführungsform umfasst das Verfahren zur Herstellung einer mehrschichtigen Lackierung die folgenden Schritte:
Herstellung einer gehärteten Elektrotauchlackschicht auf dem metallischen Substrat durch elektrophoretisches Aufbringen eines Elektrotauchlacks auf das Substrat und anschließende Härtung des Elektrotauchlacks,
Herstellung (i) einer Basislackschicht oder (ii) mehrerer direkt aufeinander folgender Basislackschichten direkt auf der gehärteten Elektrotauchlackschicht durch (i) Aufbringen eines wässrigen Basislacks direkt auf die Elektrotauchlackschicht oder (ii) direkt aufeinanderfolgendes Aufbringen von mehreren Basislacken auf die Elektrotauchlackschicht,
Herstellung einer Klarlackschicht direkt auf (i) der Basislackschicht oder (ii) der obersten Basislackschicht durch Aufbringen eines Klarlacks direkt auf (i) die eine Basislackschicht oder (ii) die oberste Basislackschicht,
wobei (i) der eine Basislack oder (ii) mindestens einer der Basislacke ein erfindungsgemäßer Basislack ist,
gemeinsame Härtung der Basislackschicht (i) oder der Basislackschichten (ii) sowie der Klarlackschicht.
In der letztgenannten Ausführungsform wird also im Vergleich zu den oben beschriebenen Standardverfahren auf die Applikation und separate Härtung eines gängigen Füllers verzichtet. Stattdessen werden alle auf die Elektrotauchlackschicht applizierten Schichten gemeinsam gehärtet, wodurch der Gesamtprozess deutlich ökonomischer gestaltet wird. Trotzdem gelingt auf diese Weise und insbesondere durch den Einsatz eines erfindungsgemäßen Basislacks enthaltend ein Reaktionsprodukt der Aufbau von Mehrschichtlackierungen, die kaum Nadelstiche aufweisen und damit optisch besonders herausragend sind. Dies ist insbesondere deshalb überraschend, als dass bei diesem Verfahren innerhalb des abschließenden Härtungsschritts eine besonders große Menge organischer Lösemittel beziehungsweise Wasser aus dem System entweichen muss (da eben keine separate Härtung einer Füllerschicht realisiert wird), wodurch die grundsätzliche Anfälligkeit für die Erzeugung von Nadelstichen stark ansteigt.

Das Aufbringen eines Beschichtungsmittels direkt auf ein Substrat beziehungsweise direkt auf eine zuvor hergestellte Beschichtungsschicht versteht sich wie folgt. Das jeweilige Beschichtungsmittel wird so aufgebracht, dass die daraus hergestellte Beschichtungsschicht auf dem Substrat (der anderen Beschichtungsschicht) angeordnet ist und in direktem Kontakt mit dem Substrat (der anderen Beschichtungsschicht) steht. Zwischen Beschichtungsschicht und Substrat (anderer Beschichtungsschicht) ist also insbesondere keine andere Schicht angeordnet. Ohne die Angabe direkt ist die aufgebrachte Beschichtungsschicht zwar auf dem Substrat (der anderen Schicht) angeordnet, es muss aber nicht zwingend ein direkter Kontakt vorhanden sein. Insbesondere können weitere Schichten dazwischen angeordnet sein. Im Rahmen der vorliegenden Erfindung gilt also folgendes. Ist keine Spezifizierung von direkt angegeben, so ist augenscheinlich keine Beschränkung auf direkt gegeben.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken. Ferner werden in diesem Zusammenhang bevorzugt Basislacke eingesetzt, welche als Bindemittel ein Polyurethanharz aber keinen Vernetzer enthalten.
Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des Reaktionsprodukts und des pigmentierten wässrigen Basislacks gelten entsprechend auch für die besagte Mehrschichtlackierung sowie für das erfindungsgemäße Verfahren. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert oder komplett überlackiert werden soll.

Das erfindungsgemäße Verfahren eignet sich demnach zur Ausbesserung von Fehlstellen auf Mehrschichtlackierungen (Reparatur). Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235,"Filmfehler" beschrieben.

Die mit Hilfe des erfindungsgemäßen Verfahrens hergestellten Mehrschichtlackierungen können ebenfalls solche Fehlstellen aufweisen. In einer bevorzugten Ausführungsform des erfindungsgemäßen Verfahrens handelt es sich bei dem Substrat aus Stufe (1) daher um eine erfindungsgemäße Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse komplett überlackiert (Doppellackierung), sondern nur der sogenannte "Spot" repariert. Letzterer Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen (Originallackierungen) in der OEM-Automobilreparaturlackierung.

Sofern im Rahmen der vorliegenden Erfindung der Bereich der Automobilreparaturlackierung angesprochen ist, das heißt also von der Ausbesserung von Fehlstellen die Rede ist, und dabei als Substrat eine Mehrschichtlackierung, welche Fehlstellen besitzt, genannt wird, ist hiermit selbstverständlich gemeint, dass diese Substrat-Mehrschichtlackierung mit Fehlstellen (Originallackierung) in der Regel auf einem wie oben beschriebenen Metallsubstrat oder einem Kunststoffsubstrat angeordnet ist.

Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, der zur Herstellung der Substrat-Mehrschichtlackierung mit Fehlstellen (Originallackierung) eingesetzt wurde.

Die vorstehend genannten Ausführungen bezüglich des Polymers und des wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebenden Lackierungen und farb- und effektgebenden Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Bevorzugt wird das Anschleifen so ausgeführt, dass von der Originallackierung nur die Basislackierung und die Klarlackierung ab- oder angeschliffen werden, nicht aber die in der Regel darunter angeordnete Füllerschicht und Grundierungsschicht abgeschliffen wird. Auf diese Weise kann bei der Reparatur insbesondere auf die erneute Applikation von speziellen Grundierungen und Grundierfüllern verzichtet werden. Diese Form des Anschleifens hat sich insbesondere im Bereich der OEM-Automobilreparaturlackierung bewährt, da hier im Gegensatz zur Reparatur in einer Werkstatt in der Regel nur Fehlstellen im Schichtbereich Basislack und/oder Klarlack auftreten, jedoch insbesondere keine Fehlstellen im Bereich der darunter angeordneten Füller- und Grundierungsschichten auftreten. Fehlstellen in den letztgenannten Schichten sind eher im Bereich der Reparatur in Werkstätten anzutreffen. Beispielhaft seien Lackschäden wie Kratzer genannt, welche beispielsweise durch mechanische Einflüsse erzeugt werden und oft bis auf die Substratoberfläche (Metall- oder Kunststoffsubstrat) reichen.

Nach dem Anschleifen erfolgt die Applikation des pigmentierten wässrigen Basislacks auf die Fehlstelle in der Originallackierung durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauffolgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der Basislack als Bindemittel ein Polyurethanharz und als Vernetzungsmittel ein Aminoplastharz, bevorzugt ein Melaminharz, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht nur zu einer geringen Vernetzung durch das Aminoplastharz. Neben seiner Funktion als Härter dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20 °C.

Beim sogenannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht zu einer Vernetzung durch das Aminoplastharz.

Im Rahmen der Ausbesserung von Fehlstellen auf Mehrschichtlackierungen, das heißt also, wenn das Substrat eine Fehlstellen aufweisende Originallackierung darstellt, bevorzugt eine erfindungsgemäße Fehlstellen aufweisende Mehrschichtlackierung, wird bevorzugt das Niedrigtemperatureinbrennen angewendet.

Ein weiterer Aspekt der vorliegenden Erfindung ist die Verwendung des Reaktionsprodukts in pigmentierten wässrigen Basislacken zur Verbesserung der Stabilität gegen optische Fehlstellen, insbesondere Nadelstiche.

Die Qualität der Stabilität gegen Nadelstiche kann grundsätzlich anhand der Nadelstichgrenze sowie der Anzahl von Nadelstichen bestimmt werden. Die Nadelstichgrenze und deren Bestimmung können wie folgt beschrieben werden: Beim Aufbau einer Mehrschichtlackierung wird die Schichtdicke einer unterhalb der Klarlackschicht angeordneten Basislackschicht, die zudem nicht separat, sondern zusammen mit der Klarlackschicht eingebrannt wird, variiert. Bei dieser Beschichtungsschicht kann es sich beispielsweise um eine direkt auf der Elektrotauchlackschicht angeordnete Schicht und/oder eine direkt unterhalb der Klarlackschicht angeordnete Schicht handeln. Aus dem einleitend Ausgeführten folgt, dass die Tendenz zur Bildung von Nadelstichen mit der Vergrößerung der Schichtdicke dieser Schicht zunehmen muss, da entsprechend höhere Mengen an Luft, organischen Lösemitteln und/oder Wasser aus der Schicht entweichen müssen. Die Schichtdicke dieser Schicht, ab welcher Nadelstiche zu erkennen sind, wird als Nadelstichgrenze bezeichnet. Je höher die Nadelstichgrenze ist, desto besser ist augenscheinlich die Qualität der Stabilität gegen Nadelstiche. Auch die Anzahl von Nadelstichen ist selbstverständlich Ausdruck der Qualität der Stabilität gegen Nadelstiche.

Im Folgenden wird die Erfindung anhand von Beispielen erläutert.

### Beispiele

### Spezifizierung bestimmter eingesetzter Komponenten und Messmethoden

### Polyester 1 (P1):

Hergestellt entsprechend Beispiel D, Spalte 16, Z. 37 bis 59 der DE 4009858 A, wobei als organisches Lösemittel Butylglykol anstatt Butanol verwendet wurde, das heißt als Lösemittel Butylglykol und Wasser enthalten sind. Die entsprechende Dispersion des Polyesters hat einen Festkörpergehalt von 60 Gew.-%.

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin allerdings Benzil als Eichsubstanz eingesetzt wurde).

### Herstellung von Reaktionsprodukten (ER):

### ER1:

In einem 4 l Edelstahlreaktor, ausgestattet mit Ankerrührer, Thermometer und Rückflüsskühler wurden unter Stickstoff 843,9 g hydroxyl-terminiertes Polybutadien (Poly bd® R20LM, Fa. Cray Valley) mit einer OH-Zahl von 93,3 mg KOH/g und einem mittels Dampfdruckosmose bestimmten zahlenmittleren Molekulargewicht von 1200 g/mol (0,703 mol) und 1394,8 g (12,219 mol) ε-Caproiacton (Fa. BASF SE) unter Rühren vorgelegt (OH-Zahl Bestimmung nach DIN 53240). Es wurde eine Probe gezogen und mittels Gaschromatographie ein ε-Caprolacton-Gehalt von 62,1% bestimmt (Theorie: 62,3%). Anschließend wurden dem Ansatz unter Rühren 11,4 g Zinnoctoat (Octa Soligen Zinn 28, Fa. Borchers) zugesetzt und auf 150°C aufgeheizt. Nachdem der Ansatz 4,5 Stunden bei 150°C gehalten wurde, wurde erneut eine Probe gezogen und mittels Gaschromatographie ein Gehalt an freiem ε-Caproiacton von 0,1% (Nachweisgrenze: 0,1%) ermittelt.
Der Ansatz wurde auf 120°C abgekühlt, mit 250 g Butylglykol (Fa. BASF SE) angelöst und bei Raumtemperatur abgelassen.
Man erhielt nach 48 Stunden ein bei Raumtemperatur festes Polymer, was vor der Einarbeitung in Lacke bei 80°C aufgeschmolzen werden kann.
Mittels Gaschromatographie wurde ein ε-Caprolacton-Gehalt kleiner 0,1% bestimmt.

Der Feststoffgehalt des Harzes liegt bei 89,8 % (60 min bei 130°C).
Zahlenmittleres Molekulargewicht: 3100 g/mol.

### ER2:

In einem 4 l Edelstahlreaktor, ausgestattet mit Ankerrührer, Thermometer und Rückflüsskühler wurden unter Stickstoff 640,4 g hydroxyl-terminiertes Polybutadien (Poly bd® R20LM, Fa. Cray Valley) mit einer OH-Zahl von 93,3 mg KOH/g und einem mittels Dampfdruckosmose bestimmten zahlenmittleren Molekulargewicht von 1200 g/mol (0,534 mol) und 1601,0 g (14,025 mol) ε-Caproiacton (Fa. BASF SE) unter Rühren vorgelegt (OH-Zahl Bestimmung nach DIN 53240). Es wurde eine Probe gezogen und mittels Gaschromatographie ein ε-Caprolacton-Gehalt von 71,2% bestimmt (Theorie: 71,4%). Anschließend wurden dem Ansatz unter Rühren 8,6 g Zinnoctoat (Octa Soligen Zinn 28, Fa. Borchers) zugesetzt und auf 150°C aufgeheizt. Nachdem der Ansatz 5,5 Stunden bei 150°C gehalten wurde, wurde erneut eine Probe gezogen und mittels Gaschromatographie ein Gehalt an freiem ε-Caproiacton von 0,1% (Nachweisgrenze: 0,1%) ermittelt.
Der Ansatz wurde auf 120°C abgekühlt, mit 250 g Butylglykol (Fa. BASF SE) angelöst und bei Raumtemperatur abgelassen.
Man erhielt nach 48 Stunden ein bei Raumtemperatur festes Polymer, was vor der Einarbeitung in Lacke bei 80°C aufgeschmolzen werden kann.
Mittels Gaschromatographie wurde ein ε-Caprolacton-Gehalt kleiner 0,1% bestimmt.

Der Feststoffgehalt des Harzes liegt bei 89,5 % (60 min bei 130°C).
Zahlenmittleres Molekulargewicht: 4000 g/mol.

### ER3:

In einem 4 l Edelstahlreaktor, ausgestattet mit Ankerrührer, Thermometer und Rückflüsskühler wurden unter Stickstoff 1147,9 g hydroxyl-terminiertes Polybutadien (KRASOL® LBH-P 2000, Fa. Cray Valley) mit einer OH-Zahl von 51,1 mg KOH/g und einem mittels Dampfdruckosmose bestimmten zahlenmittleren Molekulargewicht von 2100 g/mol (0,547 mol) und 1093,2 g (9,577 mol) ε-Caproiacton (Fa. BASF SE) unter Rühren vorgelegt (OH-Zahl Bestimmung nach DIN 53240). Es wurde eine Probe gezogen und mittels Gaschromatographie ein ε-Caprolacton-Gehalt von 47,3 % bestimmt (Theorie: 48,4%).
Anschließend wurden dem Ansatz unter Rühren 8,9 g Zinnoctoat (Octa Soligen Zinn 28, Fa. Borchers) zugesetzt und auf 150°C aufgeheizt.
Nachdem der Ansatz 4,5 Stunden bei 150°C gehalten wurde, wurde erneut eine Probe gezogen und mittels Gaschromatographie ein Gehalt an freiem ε-Caproiacton von 0,1% (Nachweisgrenze: 0,1%) ermittelt.
Der Ansatz wurde auf 120°C abgekühlt, mit 250 g Butylglykol (Fa. BASF SE) angelöst und bei Raumtemperatur abgelassen.
Man erhielt nach 48 Stunden ein bei Raumtemperatur festes Polymer, was vor der Einarbeitung in Lacke bei 80°C aufgeschmolzen werden kann.
Mittels Gaschromatographie wurde ein ε-Caprolacton-Gehalt kleiner 0,1% bestimmt.

Der Feststoffgehalt des Harzes liegt bei 89,5 % (60 min bei 130°C).
Zahlenmittleres Molekulargewicht: 4020 g/mol.

### ER4:

In einem 4 l Edelstahlreaktor, ausgestattet mit Ankerrührer, Thermometer und Rückflüsskühler wurden unter Stickstoff 956,4 g hydroxyl-terminiertes Polybutadien (KRASOL® HLBH-P 2000, Fa. Cray Valley) mit einer OH-Zahl von 46,6 mg KOH / g und einem mittels Dampfdruckosmose bestimmten zahlenmittleren Molekulargewicht von 2410 g/mol (0,397 mol) und 787,1 g (6,896 mol) ε-Caproiacton (Fa. BASF SE) unter Rühren vorgelegt (OH-Zahl Bestimmung nach DIN 53240). Es wurde eine Probe gezogen und mittels Gaschromatographie ein ε-Caprolacton-Gehalt von 44,9% bestimmt (Theorie: 45,1%).
Anschließend wurden dem Ansatz unter Rühren 6,4 g Zinnoctoat (Octa Soligen Zinn 28, Fa. Borchers) zugesetzt und auf 150°C aufgeheizt.
Nachdem der Ansatz 4,5 Stunden bei 150°C gehalten wurde, wurde erneut eine Probe gezogen und mittels Gaschromatographie ein Gehalt an freiem ε-Caprolacton von 0,1% (Nachweisgrenze: 0,1%) ermittelt.
Der Ansatz wurde auf 120°C abgekühlt, mit 750 g Butylglykol (Fa. BASF SE) angelöst und bei Raumtemperatur abgelassen.
Man erhielt nach 48 Stunden ein bei Raumtemperatur festes Polymer, was vor der Einarbeitung in Lacke bei 80°C aufgeschmolzen werden kann.
Mittels Gaschromatographie wurde ein ε-Caprolacton-Gehalt kleiner 0,1% bestimmt.

Der Feststoffgehalt des Harzes liegt bei 69,3 % (60 min bei 130°C).
Zahlenmittleres Molekulargewicht: 4170 g/mol.

### Herstellung von wässrigen Basislacken

### Herstellung eines silbernen Vergleich-Wasserbasislacks 1 (V1)

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A:**

| Komponente | Gewichtsteile |
|---|---|
| **Wässrige Phase** | |
| 3%ige Na-Mg-Schichtsilikatlösung | 26 |
| Deionisiertes Wasser | 13,6 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung Rheovis PU 1250 (BASF), Rheologiemittel | 0,6 |
| P1 | 3,2 |
| TMDD (BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A, Festkörpergehalt mit deionisiertem Wasser auf 32,5 Gew.-% eingestellt | 20,4 |
| TMDD (BASF) | 1,6 |
| 3 Gew.-%ige wässrige Rheovis AS S130 Lösung; | 3,9 |
| Rheologiemittel, erhältlich von BASF | |
| **Organische Phase** | |
| Mischung zweier handelsüblicher Aluminiumpigmente, erhältlich von Firma Altana-Eckart | 6,2 |
| Butylglykol | 7,5 |
| P1 | 5 |

### Herstellung eines erfindungsgemäßen Wasserbasislacks 1 (E1)

Zur Herstellung des erfindungsgemäßen Wasserbasislacks E1 wurde ein Lack analog der Herstellung des Vergleichs-Wasserbasislacks 1 (V1) hergestellt, wobei anstelle des Polyesters P1 sowohl in der wässrigen Phase als auch in der organischen Phase ER1 eingesetzt wurde. Bezogen auf den Festkörperanteil (nichtflüchtigen Anteil) wurde in E1 dieselbe Menge ER1 eingesetzt, wie in V1 der Polyester P1 eingesetzt wurde. Die durch den unterschiedlichen Festkörper von ER1 und der Dispersion P1 bedingten unterschiedlichen Mengen an Butylglykol wurden in der Formulierung E1 durch entsprechenden Zusatz von Butylglykol ausgeglichen.

### Herstellung von erfindungsgemäßen Basislacken 2 bis 4 (E2 bis E4)

Analog der Herstellung von E1 wurden unter Einsatz der Reaktionsprodukte ER2 bis ER4 erfindungsgemäße Basislacke E2 bis E4 hergestellt. Der Ausgleich der unterschiedlichen Festkörper in Bezug auf die Polyesterdispersion P1 erfolgte wiederum durch entsprechenden Zusatz von Butylglykol.

Tabelle 1 zeigt nochmals die in den Wasserbasislacken (WBL) V1 und E1 bis E4 eingesetzten Polyester und Reaktionsprodukte sowie deren Anteile (bezogen auf die Gesamtmenge der Wasserbasislacke) als Übersicht.

**Tabelle 1: Zusammensetzungen der WBL V1 und E1 bis E4**

| **WBL** | **[Gew.-%]** | **Reaktionsprodukt** |
|---|---|---|
| V1 | 4,92 | P1 |
| E1 | 4,92 | ER1 |
| E2 | 4,92 | ER2 |
| E3 | 4,92 | ER3 |
| E4 | 4,92 | ER4 |

### Vergleich zwischen den Wasserbasislacken V1 und E1 bis E4

Zur Bestimmung der Nadelstichgrenze und der Nadelstichanzahl wurden Mehrschichtlackierungen nach der folgenden allgemeinen Vorschrift hergestellt:
Ein mit einer KTL beschichtetes Stahlblech der Abmessungen 30 x 50 cm wurde an einer Längskante mit einem Klebstreifen versehen, um nach der Beschichtung die Schichtdickendifferenzen ermitteln zu können. Der jeweilige Wasserbasislack wurde keilförmig elektrostatisch appliziert. Die resultierende Wasserbasislackschicht wurde während 4 Minuten bei Raumtemperatur abgelüftet und anschließend während 10 Minuten im Umluftofen bei 70°C zwischengetrocknet. Auf die getrocknete Wasserbasislackschicht wurde ein üblicher Zweikomponentenklarlack in einer Schichtdicke von 35 Mikrometern elektrostatisch appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Nach der visuellen Auswertung der Nadelstiche in der resultierenden keilförmigen Mehrschichtlackierung wurde die Schichtdicke der Nadelstichgrenze und die Anzahl an Nadelstichen ab dieser Schichtdicke (das heißt die Gesamtanzahl an Nadelstichen auf dem lackierten Blech) bestimmt. Die Ergebnisse finden sich in der Tabelle 2.

**Tabelle 2: Nadelstichgrenze und Nadelstichanzahl von Mehrschichtlackierungen, die unter Einsatz der Wasserbasislacke V1 und E1 bis E4 hergestellt wurden**

| **WBL** | **Nadelstichgrenze (Mikrometer)** | **Nadelstichanzahl** |
|---|---|---|
| V1 | 22 | 25 |
| E1 | 26 | 7 |
| E2 | 29 | 13 |
| E3 | 27 | 6 |
| E4 | 31 | 10 |

Die Ergebnisse untermauern, dass der Einsatz der erfindungsgemäßen Reaktionsprodukte beziehungsweise der erfindungsgemäßen Wasserbasislacke die Nadelstichgrenze im Vergleich zum Vergleichs-Wasserbasislack V1 deutlich erhöht und gleichzeitig die Nadelstichanzahl vermindert.

### Herstellung eines silbernen Vergleich-Wasserbasislacks 2 (V2)

Die in der Tabelle B unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle B:**

| Komponente | Gewichtsteile |
|---|---|
| **Wässrige Phase** | |
| 3%ige Na-Mg-Schichtsilikatlösung | 26 |
| Deionisiertes Wasser | 21,7 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung Rheovis PU 1250 (BASF), | 0,6 |
| Rheologiemittel | |
| P1 | 13,3 |
| TMDD (BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A, Festkörpergehalt mit deionisiertem Wasser auf 32,5 Gew.-% eingestellt | 1,8 |
| TMDD (BASF) | 1,6 |
| 3 Gew.-%ige wässrige Rheovis AS S130 Lösung; Rheologiemittel, erhältlich von BASF | 3,9 |
| | |
| **Organische Phase** | |
| Mischung zweier handelsüblicher Aluminiumpigmente, erhältlich von Firma Altana-Eckart | 6,2 |
| Butylglykol | 7,5 |
| P1 | 5 |

### Herstellung erfindungsgemäßer Wasserbasislacke 5 bis 8 (E5 bis E8)

Analog der Herstellung von E1 bis E4 wurden unter Einsatz der Reaktionsprodukte ER1 bis ER4 auf Basis des Vergleichsbasislacks V2 (Tabelle B) und Ersatz der Polyesterdispersion P1 erfindungsgemäße Basislacke E5 bis E8 hergestellt. Der Ausgleich der unterschiedlichen Festkörper in Bezug auf die Polyesterdispersion P1 erfolgte wiederum durch entsprechenden Zusatz von Butylglykol.

**Tabelle 3: Zusammensetzungen der WBL V2 und E5 bis E8**

| **WBL** | **[Gew.-%]** | **Reaktionsprodukt** |
|---|---|---|
| V2 | 10,98 | P1 |
| E5 | 10,98 | ER1 |
| E6 | 10,98 | ER2 |
| E7 | 10,98 | ER3 |
| E8 | 10,98 | ER4 |

### Vergleich zwischen den Wasserbasislacken V2 und E5 bis E8

Wie oben für die Mehrschichtlackierungen, die unter Einsatz der Wasserbasislacke V1 und E1 bis E4 hergestellt wurden, wurden Mehrschichtlackierungen unter Einsatz der Wasserbasislacke V2 und E5 bis E8 hergestellt. Auch die Auswertung hinsichtlich der Nadelstichgrenze und Nadelstichanzahl erfolgte analog. Die Ergebnisse finden sich in der Tabelle 4.

**Tabelle 4: Nadelstichgrenze und Nadelstichanzahl von Mehrschichtlackierungen, die unter Einsatz der Wasserbasislacke V2 und E5 bis E8 hergestellt wurden**

| **WBL** | **Nadelstichgrenze (Mikrometer)** | **Nadelstichanzahl** |
|---|---|---|
| V2 | 14 | 63 |
| E5 | 19 | 15 |
| E6 | 21 | 4 |
| E7 | 23 | 17 |
| E8 | 22 | 9 |

Die Ergebnisse untermauern wiederum, dass der Einsatz der Reaktionsprodukte beziehungsweise der erfindungsgemäßen Wasserbasislacke die Nadelstichgrenze im Vergleich zum Vergleichs-Wasserbasislack V2 deutlich erhöht und gleichzeitig die Nadelstichanzahl vermindert.

## Patentansprüche

1. Pigmentierter wässriger Basislack enthaltend ein Reaktionsprodukt, welches herstellbar ist durch Umsetzung von
(a) mindestens einem aliphatischen linearen Polyester mit zwei terminalen funktionellen Gruppen (a.1)
mit
(b) mindestens einem Dienpolymerisat mit zwei terminalen funktionellen Gruppen (b.1),
wobei mindestens eine Art von Gruppen (a.1) mit mindestens einer Art von Gruppen (b.1) verknüpfend umgesetzt wird, die Komponenten (a) und (b) bei der Umsetzung in einem molaren Verhältnis von 2,3/0,7 bis 1,7/1,6 eingesetzt werden und das resultierende Reaktionsprodukt ein zahlenmittleres Molekulargewicht von 1000 bis 15000 g/mol aufweist, bestimmt wie in der Beschreibung angegeben.

2. Basislack nach Anspruch 1, **dadurch gekennzeichnet, dass** das Dienpolymerisat (b) ein Polybutadien mit zwei terminalen funktionellen Gruppen und einem zahlenmittleren Molekulargewicht von 500 bis 5000 g/mol ist.

3. Basislack nach Anspruch 2 **dadurch gekennzeichnet, dass** das Dienpolymerisat als terminale funktionelle Gruppen zwei Hydroxylgruppen enthält.

4. Basislack nach einem der Ansprüche 1 bis 3, **dadurch gekennzeichnet, dass** die Komponenten (a) und (b) in einem molaren Verhältnis von 2,1/0,9 bis 1,8/1,5 eingesetzt werden.

5. Basislack nach einem der Ansprüche 1 bis 4, **dadurch gekennzeichnet, dass** das Reaktionsprodukt durch ringöffnende Umsetzung eines aliphatischen Lactons mit einem zwei terminale Hydroxylgruppen enthaltenen Dienpolymerisat hergestellt wird, wobei das molare Verhältnis von aliphatischem Lacton und Dienpolymerisat von 2/1 bis 50/1 liegt.

6. Basislack nach Anspruch 5, **dadurch gekennzeichnet, dass** das aliphatische Lacton die folgende Formel (I) aufweist: 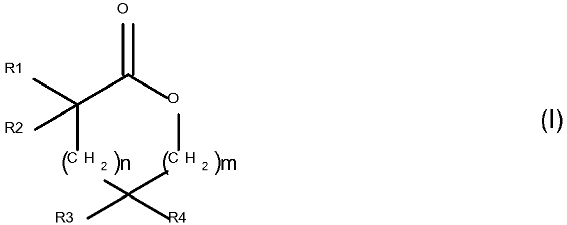 worin
R₁, R₂, R₃ und R₄, unabhängig voneinander, für H, C₁- bis C₆-Alkyl, C₃- bis C₆-Alkylen oder C₁- bis C₆-Alkoxy, bevorzugt H oder C₁- bis C₄-Alkyl, insbesondere H, stehen, und
n und m, unabhängig voneinander für eine ganze Zahl von 0 bis 6, bevorzugt 1 bis 4 stehen, und
n + m bevorzugt 2 bis 6, insbesondere bevorzugt 2 bis 4, besonders bevorzugt 3 ist.

7. Basislack nach Anspruch 6, **dadurch gekennzeichnet, dass** das Lacton epsilon-Caprolacton ist.

8. Basislack nach einem der Ansprüche 5 bis 7, **dadurch gekennzeichnet, dass** das molare Verhältnis von aliphatischem Lacton und Dienpolymerisat von 5/1 bis 40/1 liegt.

9. Basislack nach einem der Ansprüche 1 bis 8, **dadurch gekennzeichnet, dass** die Summe über die gewichtsprozentualen Anteile, bezogen auf das Gesamtgewicht des pigmentierten wässrigen Basislacks, aller Reaktionsprodukte 0,1 bis 30 Gew.-% beträgt.

10. Pigmentierter wässriger Basislack nach einem der Ansprüche 1 bis 9, **dadurch gekennzeichnet, dass** er ein mittels olefinisch ungesättigten Monomeren gepfropftes Polyurethanharz, welches zudem Hydroxylgruppen enthält, sowie ein Melaminharz umfasst.

11. Verwendung eines Reaktionsprodukts herstellbar durch Umsetzung von
(a) mindestens einem aliphatischen linearen Polyester mit zwei terminalen funktionellen Gruppen (a.1)
mit
(b) mindestens einem Dienpolymerisat mit zwei terminalen funktionellen Gruppen (b.1),
wobei mindestens eine Art von Gruppen (a.1) mit mindestens einer Art von Gruppen (b.1) verknüpfend umgesetzt wird, die Komponenten (a) und (b) bei der Umsetzung in einem molaren Verhältnis von 2,3/0,7 bis 1,7/1,6 eingesetzt werden und das resultierende Reaktionsprodukt ein zahlenmittleres Molekulargewicht von 1000 bis 15000 g/mol aufweist in einem pigmentierten wässrigen Basislack zur Verbesserung der Stabilität gegen optische Fehlstellen in Lackierungen, welche unter Einsatz des Basislacks hergestellt werden.

12. Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack gemäß einem der Ansprüche 1 bis 10 eingesetzt wird.

13. Verfahren nach Anspruch 12, **dadurch gekennzeichnet, dass** das Substrat ein mit einer gehärteten Elektrotauchlackschicht beschichtetes metallisches Substrat ist und alle auf die Elektrotauchlackschicht applizierten Schichten gemeinsam gehärtet werden.

14. Mehrschichtlackierung, herstellbar nach dem Verfahren gemäß Anspruch 12 oder 13.

## Claims

1. Pigmented aqueous basecoat material comprising a reaction product which is preparable by reaction of
(a) at least one aliphatic linear polyester having two terminal functional groups (a.1)
with
(b) at least one diene polymer having two terminal functional groups (b.1),
where at least one kind of groups (a.1) is subjected to a linking reaction with at least one kind of groups (b.1), the components (a) and (b) are used in the reaction in a molar ratio of 2.3/0.7 to 1.7/1.6, and the resulting reaction product has a number-average molecular weight of 1000 to 15 000 g/mol, determined as specified in the description.

2. Basecoat material according to Claim 1, **characterized in that** the diene polymer (b) is a polybutadiene having two terminal functional groups and a number-average molecular weight of 500 to 5000 g/mol.

3. Basecoat material according to Claim 2, **characterized in that** the diene polymer comprises two hydroxyl groups as terminal functional groups.

4. Basecoat material according to any of Claims 1 to 3, **characterized in that** the components (a) and (b) are used in a molar ratio of 2.1/0.9 to 1.8/1.5.

5. Basecoat material according to any of Claims 1 to 4, **characterized in that** the reaction product is prepared by ring-opening reaction of an aliphatic lactone with a diene polymer comprising two terminal hydroxyl groups, where the molar ratio of aliphatic lactone to diene polymer is from 2/1 to 50/1.

6. Basecoat material according to Claim 5, **characterized in that** the aliphatic lactone has the following formula (I): 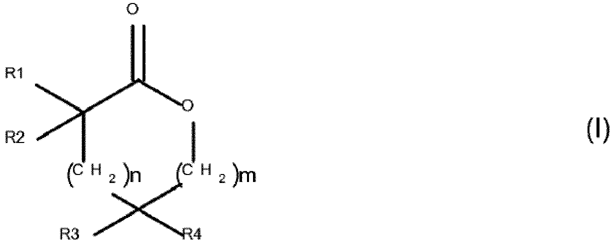 in which
R₁, R₂, R₃ and R₄, independently of one another, are H, C₁ to C₆ alkyl, C₃ to C₆ alkylene or C₁ to C₆ alkoxy, preferably H or C₁ to C₄ alkyl, more particularly H, and n and m independently of one another are an integer from 0 to 6, preferably 1 to 4, and
n + m is preferably 2 to 6, especially preferably 2 to 4, particularly preferably 3.

7. Basecoat material according to Claim 6, **characterized in that** the lactone is epsilon-caprolactone.

8. Basecoat material according to any of Claims 5 to 7, **characterized in that** the molar ratio of aliphatic lactone to diene polymer is from 5/1 to 40/1.

9. Basecoat material according to any of Claims 1 to 8, **characterized in that** the sum total of the weight percentage fractions, based on the total weight of the pigmented aqueous basecoat material, of all reaction products is 0.1 to 30 wt%.

10. Pigmented aqueous basecoat material according to any of Claims 1 to 9, **characterized in that** it comprises a polyurethane resin grafted by means of olefinically unsaturated monomers, and also comprising hydroxyl groups, and a melamine resin.

11. Use of a reaction product preparable by reaction of
(a) at least one aliphatic linear polyester having two terminal functional groups (a.1)
with
(b) at least one diene polymer having two terminal functional groups (b.1),
where at least one kind of groups (a.1) is subjected to a linking reaction with at least one kind of groups (b.1), the components (a) and (b) are used in the reaction in a molar ratio of 2.3/0.7 to 1.7/1.6, and the resulting reaction product has a number-average molecular weight of 1000 to 15 000 g/mol, in a pigmented aqueous basecoat material for improving the stability to optical defects in paint systems produced using the basecoat material.

12. Method for producing a multi-coat paint system, wherein
(1) a pigmented aqueous basecoat material is applied to a substrate,
(2) a polymer film is formed from the coating material applied in stage (1),
(3) a clearcoat material is applied to the basecoat film thus obtained, and subsequently
(4) the basecoat film is cured together with the clearcoat film,
**characterized in that** in stage (1) a pigmented aqueous basecoat material according to any of Claims 1 to 10 is used.

13. Method according to Claim 12, **characterized in that** the substrate is a metallic substrate coated with a cured electrocoat film and all layers applied to the electrocoat film are jointly cured.

14. Multi-coat paint system preparable by the method according to Claim 12 or 13.

## Revendications

1. Laque de base aqueuse pigmentée contenant un produit de réaction qui peut être préparé par transformation de
(a) au moins un polyester linéaire aliphatique présentant deux groupes fonctionnels terminaux (a.1) avec
(b) au moins un polymère diénique présentant deux groupes fonctionnels terminaux (b.1),
au moins un type de groupes (a.1) étant transformé avec liaison avec au moins un type de groupes (b.1), les composants (a) et (b) étant utilisés lors de la transformation dans un rapport molaire de 2,3/0,7 à 1,7/1,6 et le produit de réaction résultant présentant un poids moléculaire moyen en nombre de 1000 à 15.000 g/mole, déterminé comme indiqué dans la description.

2. Laque de base selon la revendication 1, **caractérisée en ce que** le polymère diénique (b) est un polybutadiène présentant deux groupes fonctionnels terminaux et un poids moléculaire moyen en nombre de 500 à 5000 g/mole.

3. Laque de base selon la revendication 2, **caractérisée en ce que** le polymère diénique contient, comme groupes fonctionnels terminaux, deux groupes hydroxyle.

4. Laque de base selon l'une quelconque des revendications 1 à 3, **caractérisée en ce que** les composants (a) et (b) sont utilisés dans un rapport molaire de 2,1/0,9 à 1,8/1,5.

5. Laque de base selon l'une quelconque des revendications 1 à 4, **caractérisée en ce que** le produit de réaction est préparé par transformation avec ouverture de cycle d'une lactone aliphatique avec un polymère diénique contenant deux groupes hydroxyle terminaux, le rapport molaire de la lactone aliphatique et du polymère diénique étant de 2/1 à 50/1.

6. Laque de base selon la revendication 5, **caractérisée en ce que** la lactone aliphatique présente la formule suivante (I) : 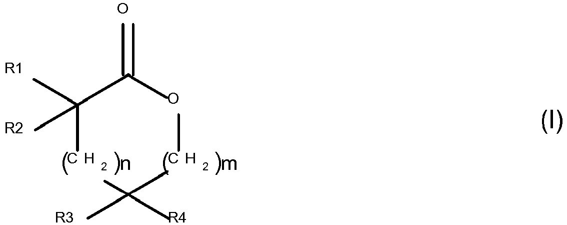 dans laquelle
R₁, R₂, R₃ et R₄, indépendamment les uns des autres, représentent H, C₁-C₆-alkyle, C₃-C₆-alkylène ou C₁-C₆-alcoxy, de préférence H ou C₁-C₄-alkyle, en particulier H, et
n et m indépendamment l'un de l'autre, représentent un nombre entier de 0 à 4, de préférence de 1 à 4, et
n + m vaut 2 à 6, en particulier de préférence 2 à 4, de manière particulièrement préférée 3.

7. Laque de base selon la revendication 6, **caractérisée en ce que** la lactone est l'epsilon-caprolactone.

8. Laque de base selon l'une quelconque des revendications 5 à 7, **caractérisée en ce que** le rapport molaire de la lactone aliphatique et du polymère diénique va de 5/1 à 40/1.

9. Laque de base selon l'une quelconque des revendications 1 à 8, **caractérisée en ce que** la somme des parts en pourcentage en poids, par rapport au poids total de la laque de base aqueuse pigmentée, de tous les produits de réaction vaut 0,1 à 30% en poids.

10. Laque de base aqueuse, pigmentée selon l'une quelconque des revendications 1 à 9, **caractérisée en ce qu'**elle comprend une résine de polyuréthane greffée par des monomères oléfiniquement insaturés, qui contient en outre des groupes hydroxyle, ainsi qu'une résine de mélamine.

11. Utilisation d'un produit de réaction pouvant être préparé par transformation de
(a) au moins un polyester linéaire aliphatique présentant deux groupes fonctionnels terminaux (a.1) avec
(b) au moins un polymère diénique présentant deux groupes fonctionnels terminaux (b.1),
au moins un type de groupes (a.1) étant transformé avec liaison avec au moins un type de groupes (b.1), les composants (a) et (b) étant utilisés lors de la transformation dans un rapport molaire de 2,3/0,7 à 1,7/1,6 et le produit de réaction résultant présentant un poids moléculaire moyen en nombre de 1000 à 15.000 g/mole, dans une laque de base aqueuse pigmentée pour améliorer la stabilité contre des défauts optiques dans les laquages qui ont été préparés avec utilisation de la laque de base.

12. Procédé pour la préparation d'un laquage multicouche, dans lequel
(1) une laque de base aqueuse pigmentée est appliquée sur un substrat,
(2) un film polymère est formé à partir de la laque appliquée dans l'étape (1),
(3) une laque claire est appliquée sur la couche de laque de base ainsi obtenue et ensuite
(4) la couche de laque de base est durcie conjointement avec la couche de laque claire
**caractérisé en ce qu'**une laque de base aqueuse pigmentée selon l'une quelconque des revendications 1 à 10 est utilisée dans l'étape (1).

13. Procédé selon la revendication 12, **caractérisé en ce que** le substrat est un substrat métallique revêtu d'une couche de laque d'électro-immersion durcie et toutes les couches appliquées sur la couche de laque d'électro-immersion sont durcies en même temps.

14. Laquage multicouche pouvant être réalisé par le procédé selon la revendication 12 ou 13.
